# EUROPÄISCHE PATENTANMELDUNG

(11) **EP 1 526 506 A1**
(43) Veröffentlichungstag der Anmeldung: **27.04.2005**
(21) Anmeldenummer: 04019035.7
(22) Anmeldetag: 11.08.2004
(51) Int. Cl.: G10L 19/00

(54) **Verfahren zur Nachbildung eines Hintergrundgeräusches bei einer Sprachverbindung**

(71) Anmelder: Siemens Schweiz AG, 8047 Zürich (CH)
(72) Erfinder: Schenk, Michael, Hettlingen (CH)
(74) Vertreter: Kley, Hansjörg

(57) **Zusammenfassung**

Für den Dienst Voice over IP (VoIP) stellt sich das Problem der Wiedergabe des Hintergrundgeräusches während Sprechpausen, da die im vorgesehenen SID-Paket (21) optionale spektrale Verteilung vielfach fehlt. Dadurch ergeben sich Interoperabilitätsprobleme, die fälschlicherweise dem B-Teilnehmer (1, 1_{B}) zugeordnet werden. Zur Lösung dieses Problems wird ein Verfahren vorgeschlagen, dass das tatsächliche Hintergrundgeräusch beim B-Teilnehmer bzw. Empfänger analysiert (10) und mittels Rauschkoeffizienten (13) nachbildet. Diese im Empfänger (1, 1_{B}) erzeugten Rauschkoeffizienten (13) werden einem Rauschgenerator (12) zugeführt, um während durch ein SIP-Paket signalisierten Sprechpausen ein Hintergrundgeräusch einzublenden.

## Beschreibung

Die vorliegende Erfindung betrifft ein Verfahren zur Nachbildung eines Hintergrundgeräusches bei einer Sprachverbindung gemäss dem Oberbegriff des Patentanspruchs 1.

Zur Vermeidung von Unklarheiten und im Sinne einer konzisen Fachsprache wird in dieser Schrift teilweise auf die englisch-sprachigen Fachbegriffe zurückgegriffen. Zur Erläuterung der verwendeten Begriffe und Akronyme wird auf die am Schluss dieses Dokuments angegebenen Listen verwiesen, die einen integrierenden Teil dieses Dokumentes bilden.

Die «Internet Telefonie», d.h. Voice over IP (VoIP) beginnt sich zu etablieren. Um Übertragungskapazität zu sparen, erfolgt bei Sprechpausen eine Übertragung eines sogenannten SID-Paketes. Dieses spezielle RTP-Paket wird bei der Detektion einer Sprechpause gesendet und enthält einen Pegel und optional eine spektrale Verteilung eines Hintergrundgeräusches. SID-Paketes sind in ITU-T G.711 App II [1] spezifiziert. Ein solches SID-Paket dient bei einer Sprachverbindung dazu, dass bei einem Teilnehmer, während einer Sprechpause ein Hintergrundgeräusch vorhanden ist, um zu vermeiden dass eine Person den Eindruck erhalten könnte, die Verbindung sei abgebrochen oder abgebrochen worden. Ein solches generiertes Rauschen wird von der betreffenden Person als Hintergrundgeräusch wahrgenommen, in der englischen Fachsprache wird dazu der Begriff «comfort noise» verwendet.

Viele im Markt erhältliche VoIP-Telefongeräte senden in einem SID-Paket lediglich den Pegel, nicht aber die optionale spektrale Verteilung gemäss ITU-T G.711 App II [1]. Die spektrale Verteilung wird oft deshalb nicht übertragen, weil deren Erfassung relativ rechenintensiv ist.

Die übertragenen Pegel sind dabei ganz verschieden und insbesondere ist deren Erfassung in keiner Weise kalibriert. Dadurch ergeben sich beim empfangenden Teilnehmer - das ist ein Telefonapparat - Interoperabilitätsprobleme. Gravierend ist dabei, dass fälscherlicherweise angenommen wird, dass diese Probleme beim empfangenden Telefonapparat liegen, die Quelle des Problems liegt jedoch beim A-Teilnehmer.

Bisher wurde - da nur der Pegel übertragen wurde - die Erzeugung des Hintergrundgeräusches durch das Einblenden von sogenannt weissem Rauschen gelöst. Dieses Einblenden von einem Einheitsrauschen wird als unnatürlich empfunden und stellt daher keine Lösung für das obgenannte Interoperabilitätsproblem dar.

In US 2003/0093270 A1 [4] ist ein Verfahren zur Erzeugung eines Hintergrundgeräusches mit folgenden Verfahrensschritten offenbart:
i) Aufzeichnung des tatsächlichen Hintergrundgeräusches während vorbestimmter Zeitabschnitte;
ii) Übertragung eines Teils der aufgezeichneten Hintergrundgeräusche.
In einer Weiterentwicklung dieses Verfahrens wird weisses Rauschen hinzugefügt. Dieses Verfahren ist für die Internet-Telefonie nur bedingt geeignet und wird von Personen immer noch als unnatürlich empfunden.

Der vorliegenden Erfindung liegt daher die Aufgabe zugrunde, ein Verfahren für den Dienst VoIP anzugeben, das ein Hintergrundgeräusch nachbildet, welches unabhängig von der Erfassung der Pegel und des Spektrums bei Sprechpausen beim sendenden Teilnehmer ist und für den Benutzer trotzdem «echte» Hintergrundgeräusche bei Sprechpausen erzeugt.

Diese Aufgabe wird erfindungsgemäss durch das im Patentanspruch 1 angegebene Verfahren gelöst.

Gemäss dem erfindungsgemässen Verfahren, wonach
A ein zweites Sprachendgerät an einem IP-Netzwerk angeschlossen ist und Sprache in Datenpaketen übertragen wird,
B das während der Sprachverbindung übertragene Hintergrundgeräusch beim zweiten Gerät analysiert wird,
C eine Sprechpause durch ein SID-Paket signalisiert wird,
D während einer durch ein SID-Paket signalisierten Sprechpause beim zweiten Gerät das zuvor analysierte Hintergrundgeräusch solange in die Sprachverbindung eingeblendet wird, bis vom ersten Gerät wieder ein Datenpaket mit Sprache gesendet wird;
werden für Sprachverbindungen mit dem Dienst VoIP Hintergrundgeräusche während Sprechpausen erzeugt, die einerseits unabhängig von einer solchen Erfassung durch den A-Teilnehmer sind und andererseits weitestgehend mit dem tatsächlichen Hintergrundgeräusch während einer Sprachverbindung kongruent sind. Erfindungsgemäss wird daher das Rauschen beim Empfänger nachgebildet im Gegensatz zum Stand der Technik, wo das Rauschen durch eine Übertragung von Rauschkoeffizienten vom Sender-Codec zum Empfänger-Codec realisiert wird. Durch die Auswertung der SID-Pakete ist dieses Verfahren voll kompatibel mit dem Standard ITU-T G.711 Appendix II [1] und somit auch für Sprachverbindungen geeignet, dessen A-Teilnehmer an einem POTS/ISDN-Netz angeschlossen ist.

Im Sinne dieser Schrift und erfindungsgemässen Lehre sind die verwendeten Begriffe wie folgt zu verstehen und beinhalten nachfolgend beschriebene Ausprägungen:
i) Sprachendgerät, Telefonapparat, Telefon, Teilnehmer und Subscriber bezeichnen die gleiche Einheit, die Begriffe sind jedoch auf den jeweiligen Kontext abgestimmt.
ii) A-Teilnehmer, B-Teilnehmer im Sinne des POTS/ISDN: rufender Teilnehmer, gerufener Teilnehmer.

Vorteilhafte Ausgestaltungen und Implementationen des erfindungsgemässen Verfahrens sind in weiteren Ansprüchen angegeben.

Ausführungsbeispiele der Erfindung werden nachfolgend anhand der Zeichnung näher erläutert. Dabei zeigt:
- Figur 1: Prinzipelle Darstellung einer Sprachverbindung über ein paketorientiertes Netz;
- Figur 2: Darstellung der paketierten Sprachübermittlung mit einem eine Sprechpause repräsentierenden Paket;
- Figur 3: Funktionale Komponenten eines Telefonapparates zur Durchführung des erfindungsgemässen Verfahrens.

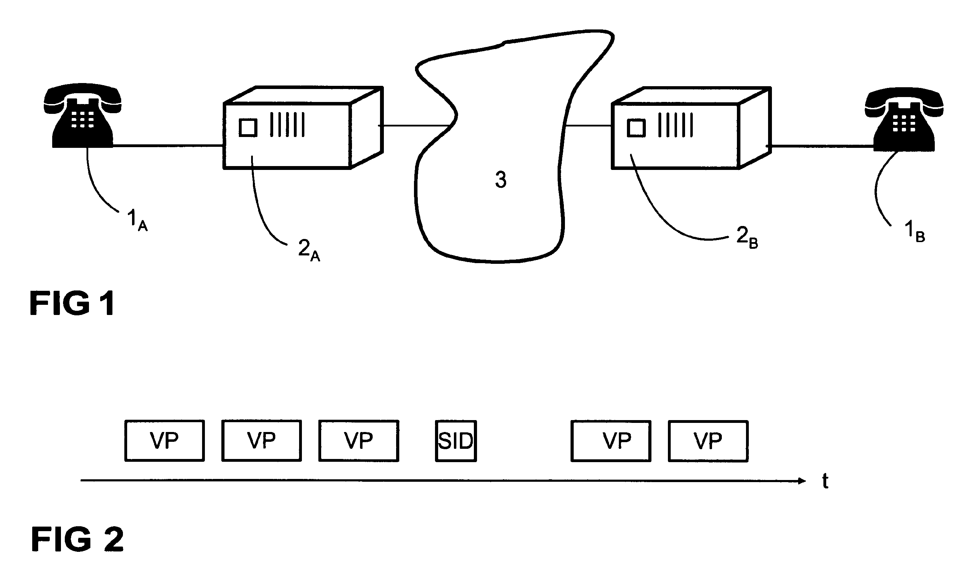

Figur 1 zeigt eine prinzipielle Darstellung einer Sprachverbindung über ein paketorientiertes Netz mit folgenden Komponenten:
- rufender Teilnehmer 1_{A}, über ein Router 2_{A} an ein paketorientiertes Netz 3 angeschlossen;
- gerufener Teilnehmer 1_{B}, über ein Router 2_{B} an ein paketorientiertes Netz angeschlossen 3.
Die Darstellung der Teilnehmer 1A bzw. 1B mit einem klassischen Telefonapparat ist in keiner Weise auf solche beschränkt, ein solcher Teilnehmer kann durchaus auch ein Personalcomputer mit einer Sprechgarnitur und einer zugehörigen Schnittstellenkarte sein.

Die Übertragung eines Gespräches erfolgt in paketierter Weise wie dies in Figur 2 dargestellt ist. RTP-Pakete VP enthalten die Sprachinformation, wobei die Codierung (zu unterscheiden von der Paketierung) der Sprache vorzugsweise gemäss ITU-T G.711 [3] erfolgt. Wird vom A-Teilnehmer eine Sprechpause erkannt, wird ein SID-Paket vom A-Teilnehmer zum B-Teilnehmer gesandt. Der dargestellte zeitliche Abstand zwischen einem Paket SID und einem nachfolgenden Paket VP ist dabei beliebig. Nicht dargestellt sind weitere Pakete, die Signalisierinformation zur laufenden Gesprächsverbindung enthalten.

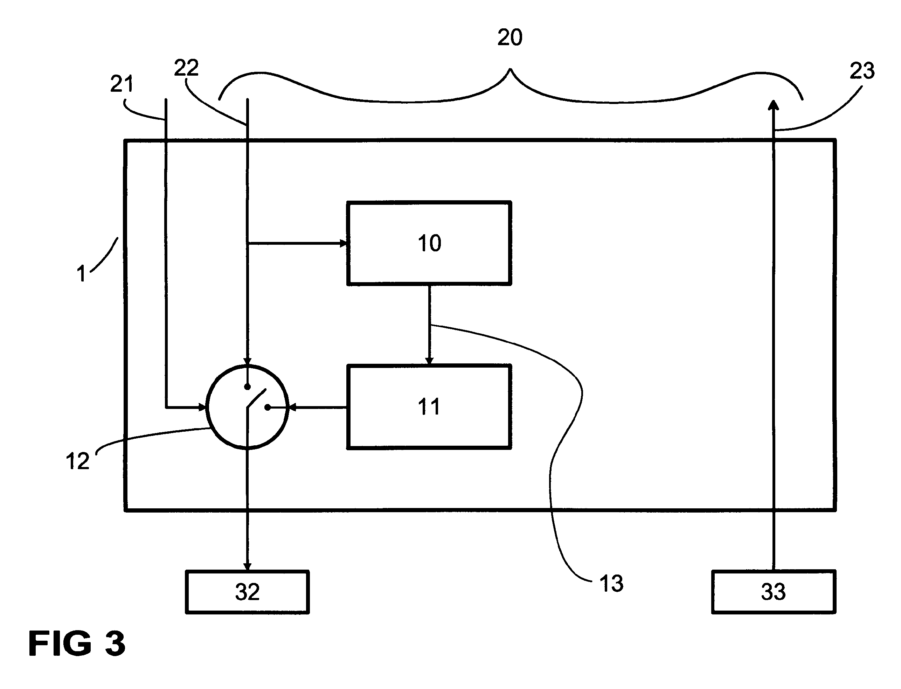

Das erfindungsgemässe Verfahren zur Erzeugung eines Hintergrundgeräusches wird im Kontext der Figuren 1 und 2 detaillierter anhand der Figur 3 erläutert. Dargestellt ist ein Gerät 1, genau ein B-Teilnehmer 1_{B}. Die eingehenden Sprachpakete VP werden einerseits über eine nicht dargestellte Decodierschaltung - meist «Decoder» genannt - dem Lautsprecher 32 zugeführt. Andererseits werden diese Pakete einem Hintergrundgeräusch-Analysator 10 zugeführt. In dieser Einheit 10 wird dabei der Pegel und die spektrale Verteilung des Hintergrundgeräusches ermittelt und abgespeichert, vorzugsweise gemäss einem vorgegebenen zeitlichen Raster. Dieses Raster braucht jedoch zeitlich gesehen nicht äquidistant zu sein. Abgespeicherte Pegel und spektrale Verteilung werden als Rauschkoeffizienten 13 einem Hintergrundgeräuschgenerator 11 zugeführt, welcher aus den vorgenannten Rauschkoeffizienten (enthaltend die zwei Grössen Pegel und Spektrum) ein Hintergrundgeräusch erzeugt. Der Hintergrundgeräuschgenerator 11 ist an einen Umschalter 12 angeschlossen, dem auf einem weiteren Eingang die Sprachdaten, Sprachpakete vom A-Teilnehmer zugeführt werden. Der Umschalter 12 wird durch die Signalisierung 21 gesteuert, nämlich durch ein eingehendes SID-Paket, das eine Sprechpause signalisiert. Auf dem Pfad 22 ist des weiteren ein nicht dargestellter Voice-Activity Detector Einheit vorgesehen, der das Ankommen von Sprache enthaltenden Paketen VP indiziert und so den Umschalter 12 betätigt. Im Sprachendgerät 1 ist des weiteren ein gehender Pfad 23 vorgesehen, der die vom Mikrofon 33 aufgenommene Sprache in codierter Form dem IP-Netzwerk zuführt.

Aus der obigen Darstellung eines nach dem erfindungsgemässen Verfahren betriebenen Sprachendgerätes 1 wird der besondere Vorteil dieser Lösung offensichtlich: Die Nachbildung des Hintergrundgeräusches ist vollständig unabhängig vom Gerät 1_{A} und bestimmbar durch das tatsächliche Hintergrundgeräusch beim B-Teilnehmer während einer Sprachverbindung.

Es ist in diesem Dokument von Sprachverbindung und von «gesprochener» Sprache die Rede. Dies ist jedoch nicht einschränkend zu verstehen, sondern auch für andere akustische Übertragungen anwendbar wie beispielsweise Musik oder Tierlaute.

Das vorgenannte Ausführungsbeispiel bezieht sich auf symmetrische Teilnehmer 1_{A}, 1_{B} wo diese beide an ein auf dem Internet-Protokoll basierenden Netzwerk 3 angeschlossen sind. Dies ist für die Erfindung nicht erforderlich, möglich ist auch, dass lediglich der B-Teilnehmer 1_{B} an ein IP-Netzwerk 3 angeschlossen ist, während der A-Teilnehmer 1_{A} an ein leitungsvermitteltes POTS/ISDN-Netzwerk angeschlossen ist, dass seinerseits über ein Gateway an das IP-Netzwerk 3 angeschlossen ist.

### Liste der verwendeten Bezugszeichen

- 1, 1_{A}, 1_{B}: Sprachendgerät, Telefonapparat, auf A- bzw. B-Seite
- 2, 2A, 2B: Router, Netzzugangsgerät, integriertes Netzzugangsgerät IAD,
auf A- bzw. B-Seite
- 3: Netzwerk, IP-Netzwerk
- 10: Hintergrundgeräusch-Analysator
- 11: Hintergrundgeräusch-Generator
- 12: Umschalter
- 13: übertragene Rauschkoeffizienten, z.B. gemäss G.711 Appendix II
- 20: Sprachdaten, Sprachpakete, als RTP-Pakete VP übermittelt
- 21: Signalisierung, Signalisierdaten, als Pakete SID übermittelt
- 22: Pfad, Sprachdaten, Sprachpakete; kommend, downstream
- 23: Pfad, Sprachdaten, Sprachpakete; gehend, upstream
- 32: Lautsprecher
- 33: Mikrofon

### Liste der verwendeten Abkürzungen

- IAD: Integrated Access Device
- IP: Internet Protocol
- ISDN: Integrated Service Digital Network
- POTS: Plain Old Telephone Service
- RTP: Real Time Protocol
- SID: Silence Insertion Descriptor
- VoIP: Voice over Internet Protocol

### Liste der zitierten Schriften; Angaben zu Fundstellen

- [1]: ITU-T G.711 Appendix II (02/2000)
A comfort noise payload definition for ITU-T G.711 use in packet-based multimedia communication systems
- [2]: CCITT G.726
ITU-T G.726
40, 32, 24, 16 kbit/s Adaptive differential pulse code modulation (ADPCM) ; 1990
- [3]: ITU-T G. 711
Pulse code modulation (PCM) ; 1988, 1993
- [4]: US 2003/0093270 A1;
May 15, 2003;
Comfort Noise including Recorded Noise Inventor: Steven M. Domer.

## Patentansprüche

1. Verfahren zur Nachbildung eines Hintergrundgeräusches bei einer Sprachverbindungen von einem ersten Gerät (1_{A}) zu einem zweiten Gerät (1_{B}),
**dadurch gekennzeichnet, dass**
A das zweite Gerät (1_{A}, 1_{B}) an einem IP-Netzwerk (3) angeschlossen ist und Sprache in Datenpaketen (VP) übertragen wird;
B das während der Sprachverbindung übertragene Hintergrundgeräusch beim zweiten Gerät (1_{B}) analysiert wird;
C eine Sprechpause durch ein SID-Paket signalisiert wird;
D während einer durch ein SID-Paket signalisierten Sprechpause beim zweiten Gerät (1_{B}) das zuvor analysierte Hintergrundgeräusch solange in die Sprachverbindung eingeblendet, bis vom ersten Gerät (1_{A}) wieder ein Datenpaket (VP) mit Sprache gesendet wird.

2. Verfahren nach Anspruch 1,
**dadurch gekennzeichnet, dass**
im zweiten Gerät ein Hintergrundanalysator (10) enthalten ist, der das Hintergrundgeräusch gemäss G.711 Appendix II als Rauschkoeffizienten (13) nachbildet.

3. Verfahren nach Anspruch 2,
**dadurch gekennzeichnet, dass**
vom Hintergrundanalysator (10) die Rauschkoeffizienten (13) an einen Hintergrundgeräuschgenerator (12) geleitet werden, um während der Sprechpausen ein Hintergrundgeräusch einzublenden.

4. Verfahren nach einem der Ansprüche 1 bis 3,
**dadurch gekennzeichnet, dass**
das erste Gerät (1_{A}) an das IP-Netzwerk (3) angeschlossen ist.

5. Verfahren nach einem der Ansprüche 1 bis 4,
**dadurch gekennzeichnet, dass**
das erste Gerät (1_{A}) an ein leitungsvermitteltes POTS/ISDN-Netzwerk angeschlossen, das über ein Gatway mit dem IP-Netzwerk (3) verbunden ist.
